# EUROPEAN PATENT SPECIFICATION

(11) **EP 1 079 703 B1**
(45) Date of publication and mention of the grant of the patent: **28.08.2002**
(21) Application number: 99924943.6
(22) Date of filing: 06.05.1999
(51) Int. Cl.: A23K 1/16

(54) **USE OF A NATURAL SUBSTANCE CONTAINING THYMOL IN THE MANUFACTURE OF ANIMAL FEED AGAINST CLOSTRIDIUM SP**
VERWENDUNG VON THYMOL ENTHALTENDEN NATURSTOFFEN ZUR HERSTELLUNG EINES TIERFUTTERS GEGEN CLOSTRIDIUM SP
UTILISATION D'UNE SUBSTANCE NATURELLE CONTENANT DU THYMOL POUR LA FABRICATION D'ALIMENTS POUR ANIMAUX CONTRE CLOSTRIDIUM SP

(30) Priority: 18.05.1998 SE 9801742
(43) Date of publication of application: 07.03.2001
(73) Proprietor: AKZO NOBEL N.V., 6800 SB Arnhem (NL)
(72) Inventor: AEBI, Robert, CH-1272 Genolier (CH); LOSA, Riccardo, CH-1145 Bière (CH)
(74) Representative: Andersson, Rolf
(86) International application number: EP9903245
(87) International publication number: WO99059430

(56) References cited:
- WO-A-96/13175
- US-A- 5 558 889
- M.D. PIERSON ET AL.: "Inhibition of Clostridium Botulinum by Antioxidants and Related Phenolic Compounds in Comminuted Pork" JOURNAL OF FOOD SCIENCE., vol. 47, 1982, page 1926-1929,1935 XP002113955 INSTITUTE OF FOOD TECHNOLOGISTS. CHICAGO., US ISSN: 0022-1147
- DATABASE CAPLUS [Online] accession number: 1982:525854, 1997 XP002113957 & UEDA, SHIGEKO ET AL: "Inhibition of Clostridium Botulinum and Bacillus sp. by spices and flavoring compounds" NIPPON SHOKUHIN KOGYO GAKKAISHI, vol. 29, no. 7, 1982, pages 389-392,
- SCHRÄGLE ET AL.: "The Influence of Selected Tannin-Containing Plant Species on the Tenacity of Pathogenic Bacteria in an In-vitro Rumen System" JOURNAL OF VETERINARY MEDICINE. SERIES B - ZENTRALBLATT FUER VETERINAERMEDIZIN. REINE B., vol. 37, May 1990 (1990-05), pages 181-186, XP002113956 PAUL PAREY, BERLIN., DE ISSN: 0931-1793

## Description

The present invention relates to the use of a natural active substance containing thymol in the manufacture of an animal feed or a drinking water supplement for the alleviation, cure or prevention of diseases caused by clostridium sp - particularly clostridium perfringens - in the intestinal tracts of animals, such as poultry and mammals. The presence of the substance also improves the digestibility of the feed and the growth rate of the animals. The active substance preferably contains a mixture of guaiacol, thymol, eugenol, capsaicin, tannin and at least one cresol.

Diseases caused by clostridium sp are common in animal stocks of poultry, pigs, rabbits and rats. There is for example, a link between the disease necrotic enteritis and the presence of clostridium perfringens. Necrotic enteritis is characterized by severe inflammation and sloughing of the intestinal tracts and often occurs together with coccidiosis.

Many articles have disclosed the amount of clostridium perfringens in the digestive tracts to have considerable impact on the health and growth rate of a broiler. Typical symptoms of infected birds are; ruffled feathers, noticeable depression, loss of appetite, loose/runny droppings or diarrhoea and a marked reluctancy to move. Examples of such articles are B.S. Bains (1979) "A manual for poultry diseases" (Ed. Roche, Basel Switzerland); B Köhler, K Vogel and P Starost (1979) "Nekrotisierende und Ulzerative Enteritis bei Hühner der Mast- und Legerichtung unter Bedingungen industriemässiger Geflügelproduktion" (Mh. Vet.-Med., 32, 704-711); B Köhler, K Vogel, W Witte and H Kühn (1983) "Vergleich der Ursachen von Hospitalismus durch Cl. perfringens, Staphylococcus aureus und Salmonellen unter den Bedingungen der industriemässigen Geflügelproduktion und Möglichkeiten ihrer Bekämpfung", (V. Intern. Tierhyg. Symposium, 25 und 26.05.93, Leipzig, Sammelband der Vorträge, Veterinärmedizinische Fakultät Leipzig); Th. Vissienon, U Johannsen and B Köhler (1994) "Untersuchungen zur Pathologie und Phatogenese der Clostridium-Perfringens-Typ-A-Enterotoxämie des Huhnes. 1. Versuche zur experimentellen Erzeugung der Krankheit, Versuchsansatz, klinisches Bild und Moralitätsraten", (Mh. Vet.-Med., 49, 23-28); Th. Vissienon, U Johannsen, M Solveig and B Köhler (1994) "Untersuchungen zur Pathologie und Phatogenese der Clostridium-Perfringens-Typ-A-Enterotoxämie des Huhnes. 2. Pathomorphologische und bakteriologische Befunde nach experimenteller intraduodenaler Cl.-perfringens-Typ-A-Infektion" (Sporen und vegetative Keime) und Toxinapplikation (Mh. Vet.-Med., 49, 93-102).

The reference M.D. Pierson et al., "Inhibition of Clostridium Botulinum by Antioxidants and Related Phenolic Compounds in Comminuted Pork" Journal of Food Science., vol. 47, 1982, page 1926-1929, 1935 XP002113955 Institute of Food Technologists. Chicago., US ISSN: 0022-1147, discloses by means of in vitro tests the effect of antioxidants and related phenolic compounds on Clostridium botulinum and the toxin production of Clostridium botulinum in packed comminuted pork. All the chemicals tested, except 8-hydroxyguinoline, were much less active than sodium nitrite. The effect of the other tested chemicals were low or non-existing.

A wide spectrum of antibiotics, such as penicillin, bacitracin and furazolidone are used in treatment. Where the disease is endemic, preventive medication is often added to the animal feed. However, in recent years there has been intense debate about the use of chemical and antibiotic growth promoters and in many countries a ban on this type of feed additives is being considered. Thus, there is an urgent need for agriculture to develop substances which are in line with reliable and generally accepted practice and not of a medicinal nature.

One objective of the present invention is to provide an animal feed or a drinking water supplement which contain natural substances for the cure, prevention or alleviation of the negative effects caused by clostridia on animals in the intestinal tracts. Another objective is to improve the digestibility of the animal feed and thereby hamper or reduce the growth of clostridium sp. A third objective is to reduce the negative effects on the animal growth caused by the presence of clostridium sp.

According to the invention it has been found that these objectives can be achieved by using, in the manufacture of an animal feed or a drinking water supplement, an effective amount of natural substances - comprised of thymol - for the alleviation, cure or prevention of diseases caused by clostridium sp in the intestinal tracts of animals. By the expression "a natural substance" is in this context understood a substance which consists of compounds occurring in nature and obtained from natural products or through synthesis. The natural substance should preferably contain a mixture consisting of guaiacol, thymol, eugenol, capsaicin, tannin and at least one cresol. Preferably, thymol is the major component of the mixture and most preferably, not less than 50% by weight. Suitably the mixture contains 1-40% by weight of guaiacol, 10-93% by weight of thymol, 1-40% by weight of eugenol, 0.1-20% by weight of capsaicin, 1-75% by weight of tannin and 1-40% by weight of cresol, the amounts being calculated on the total amount of said components. The total amount of these active ingredients may vary within wide limits but is normally from 1 to 500 ppm, preferably between 10 and 100 ppm, calculated on the dry weight of the animal feed. The various active ingredients are all of natural origin and are found in different parts of plants. The animal feed and the drinking water supplement comprising the active ingredients of the invention exhibit excellent effects on necrotic enteritis caused by clostridium perfringens. The presence of the active ingredients also improves the digestibility of the animal feed and reduces the negative effects on the animal growth rate caused by the presence of clostridium sp.

A poultry feed additive composition containing a mixture of cresols, guaiacol, thymol, anethol, eugenol, capsaicin and tannin for the reduction of coccidiosis has previously been disclosed in WO 96/13175, but this feed additive also contains, as a necessary ingredient, a surface active emulsifying agent. The present invention however, does not require the presence of a surface active emulsifying agent.

In a preferred embodiment of the invention the animal feed may contain 1-5 ppm of cresol, 1-5 ppm guaiacol, 5-50 ppm of thymol, 1-5 ppm of eugenol, 0.1-2 ppm capsaicin and 1-20 ppm tannin. In addition hereto, the animal feed can also contain other chemical compounds of plant origin such as flavourings in an amount of 0.5-50 ppm, calculated on the dry weight of the animal feed. Examples of suitable flavourings are 0.05-0.5 ppm creosol, 0.1-5 mg anethole, 0.1-2 ppm of deca-, undeca- and/or dodecalactones, 0.1-2 ppm quinoleine, 0.1-2 ppm ionones and/or irone, 0.05-1 ppm gingerol, 0.05-1 ppm piperidine, 0.05-1 ppm propylidene and/or butylidene phtalides and 0.1-5 ppm amyl and/or benzyl salicilate. The incorporation of active ingredients into the animal feed is usually carried out by preparing a premix of the active ingredients and other suitable additives. Such a premix may comprise 2-10% by weight of the active mixture, 0-40% by weight of other conventional additives, such as flavourings, and 50-98% by weight of any conventional absorbing support. The support may contain, for example, 40-50% by weight of wood fibres, 8-10% by weight of stearin, 4-5% by weight of curcuma powder, 4-5% by weight of rosemary powder, 22-28% by weight of limestone, 1-3% by weight of a gum, such as gum arabic, 5-50% by weight of sugar and/or starch and 5-15% by weight of water.

This premix is then mixed with vitamins, enzymes, mineral salts, ground cereals, protein-containing components, carbohydrate-containing components, wheat middlings and/or brans in the preparation of an animal feed additive. Such an additive contains 0.2-5% by weight of the premix and 80-99.8% by weight of the ingredients mentioned above. The animal feed additive is then finally added to the feed in such quantities that the feed will contain 1-500 ppm, preferably 10-100 ppm, of the active mixture. The animal feed additive normally constitutes 0.3-3.5% by weight of the animal feed.

The animal feed according to the invention usually contains, calculated on the dry weight of the feed, the following ingredients:
a) 0-80%, preferably 10-70%, by weight of cereals,
b) 0-30%, preferably 1-12%, by weight of feed fat,
c) 0-85%, preferably 10-50%, by weight of protein containing nutritious substances of a type other than cereals, and
d) 1-500 ppm, preferably 10-100 ppm, of the mixture.
The total amounts of a)-d) are preferably at least 80% by weight.

When preparing the animal feed, the animal feed additive can be mixed with the dry ingredients consisting of cereals, such as ground or crushed wheat, oats, barley, maize and rice; vegetable protein feed based on e.g. rapeseed, soya bean and sunflower; animal protein feed, such as blood meal, meat and bone meal and fish meal; molasses; and milk products, such as various milk powders and whey powders. After mixing all the dry additives, the liquid ingredients and ingredients, which after heating become liquid, can be added. The liquid ingredients may consist of lipids, such as fat, for example slaughter fat and vegetable fat, optionally liquefied by heating, and/or of carboxylic acids, such as a fatty acid. After thorough mixing, a mealy or particulate consistency is obtained, depending on the degree of grinding of the ingredients. To prevent separation during storage, water should preferably be added to the animal feed, which then is subjected to a conventional pelletising, expanding or extruding process. Any excess water can be removed by drying. If desired, the resulting granular animal feed can also be crushed to a smaller particle size.

Within the scope of the invention, it is also possible to produce a suspension of the animal feed. This is especially convenient if the feed is prepared for immediate consumption.

The drinking water supplement may contain 2-90% by weight, preferably 10-50% by weight, of the natural substance. Preferably the natural substance contains a mixture of guaiacol, thymol, eugenol, capsaicin, tannin and at least one cresol and preferably thymol is the major component of the mixture and most preferably not less than 50% by weight. Suitably the mixture contains 1-40% by weight of guaiacol, 10-93% by weight of thymol, 1-40% by weight of eugenol, 0.1-20% by weight of capsaicin, 1-75% by weight of tannin and 1-40% by weight of cresol, the amounts being calculated on the total amount of said components. Beside the natural substance the supplement may also contain 10-98% by weight of a large number of other ingredients. Common ingredients are mineral salts, vitamines, flavourings, water-soluble or water-dispersable carriers, such as sugars, powdered milk, milk-by-products and cellulose derivatives, and stabilisers, such as water-soluble or water-dispersable polymers. When preparing the drinking water, the supplement is normally added to the water in such an amount that the concentration of the natural substance becomes 1-500 ppm.

The present invention will now be further illustrated by the following Examples.

### Example 1

The efficacy of the mixture of the invention to reduce the occurrence of clostridia and in particular clostridium perfringens and to increase the animal growth rate was measured. The tests were performed on young fowls, which were put on commercial diets with the following basic compositions.

**Table 1.**

| Feeding program | Starter feed | Grower feed | Finisher feed |
|---|---|---|---|
| Crude protein, % | 23.0 | 21.5 | 21.0 |
| Crude fat, % | 8.9 | 10.5 | 10.5 |
| Crude fibre, % | 3.0 | 3.1 | 3.4 |
| Crude ash, % | 5.5 | 5.0 | 4.8 |
| MJME, kg | 13.0 | 13.4 | 13.4 |

These diets were formulated by mixing suitable amounts of wheat, soyabean meal, peas, rapeseed meal, bone meal and oil. To the diets administered to a control group were also added zinc-bacitracin, a traditional growth promoter in the ratio of 20 mg per kg of the feed, and to the diets administered to the experimental group 50 mg per kg of the feed of a mixture consisting of 3 mg cresols, 3 mg guaiacol, 30 mg thymol, 3.5 mg eugenol, 0.5 mg capsaicin and 10 mg tannin, the main component in this mixture being thymol. To the feed of both groups was also added 5 mg ammonium-maduramicin per kg of feed. The fowls were divided into two groups and fed for 39 days on the two feed compositions. The following results were obtained.

**Table 2.**

| | Experimental group | Control group |
|---|---|---|
| Animals, no | 21 600 | 32 400 |
| Chicken, weight at start, g | 35.5 | 35.9 |
| Weight, 39 days, g | 2 056 | 2 048 |
| Growth/day, g | 51.79 | 51.59 |
| Feed conversion rate | 1.71 | 1.73 |

The results clearly demonstrate the growth rate of the fowls to be improved by the addition of the mixture according to the invention in comparison to the growth obtained with the addition of the traditional growth promoter, zink-bacitracin, also known to limit the development of clostridia. Furthermore, the feed conversion rate (feed intake/increase in weight) was also improved when the animal feed according to the invention was used.

The occurrence of clostridia in the digestive tract was also determined. Samples of ileum, caecum and colon were taken from both groups on days 5, 18 and 32 of the trial. Each trial examination group consisted of 10 fowls chosen at random. The presence of Clostridia and of Clostridium perfringens were isolated and confirmed by testing for the production of toxins. The following results were obtained.

**Table 3.**

| Percentage of positive sample of clostridia and Clostridium perfringens | | |
|---|---|---|
| | Experimental group | Control group |
| Whole digestive tract | | |
| Total clostridia | 79 | 92 |
| Clostridium perfringens Ileum | 26 | 52 |
| Clostridium perfringens Caecum | 33 | 50 |
| Clostridium perfringens Colon | 23 | 50 |
| Clostridium perfringens | 20 | 57 |

**Table 4.**

| Percentage of positive samples of Clostridium perfringens on different days | | |
|---|---|---|
| Day | Experimental group | Control group |
| 5 | 33 | 46 |
| 18 | 20 | 30 |
| 32 | 23 | 80 |

The occurrence of clostridia in general and of Clostridium perfringens in particular is essentially lower when the mixture of the invention is added to feed when compared to an addition of zinc-bacitracin.

### Example 2.

The antimicrobial activity of the mixture of the invention towards Clostridium perfringens was determined in the following manner.

Clostridium perfringens ATCC 13124 (10.6 cfu/ml) was added to cultures containing different amounts of the mixture disclosed in Example 1 and the cultures were left to incubate. After incubation a first reading was taken before agitation. The growth of the cultures of the invention was also compared to the growth of the controls by visual comparison. Where the culture remained clear this indicated no growth. In case of doubtful samples (usually those containing high concentrations of the mixture) a subculture was prepared from the broth into gelose to confirm, if any growth had taken place. The following results were obtained.

| | Concentration of the mixture according to the invention, ppm | | | | | | |
|---|---|---|---|---|---|---|---|
| | 500 | 250 | 125 | 100 | 75 | 50 | 0 |
| Growth | -/-/- | -/-/- | +/+/+ | +/+/+ | +/+/+ | +/+/+ | |
| Control | | | | | | | +/+/+ |
| Comparison, Invention/Control | -/-/- | -/-/- | -/-/- | -/-/- | -/-/- | -/-/- | |
| The symbol "-" indicates no growth or, in the comparison, lower growth than the control, while "+" indicates growth or, in the comparison, more growth than the control. | | | | | | | |

From the results it is evident that the mixture of the invention has an in vitro bacteriostatic effect on Clostridium perfringens.

## Claims

1. Use of a natural substance, in this context a substance consisting of compounds occuring in nature and obtained from natural products or through synthesis, containing thymol in the manufacture of an animal feed or a drinking water supplement for the alleviation, cure or prevention of diseases caused by clostridium sp in the intestinal tracts of animals.

2. Use according to claim 1, wherein the natural substance contains a mixture of guaiacol, thymol, eugenol, capsaicin, tannin and at least one cresol.

3. Use according to claim 2, wherein the mixture contains 1-40% by weight of guaiacol, 10-93% by weight of thymol, 1-40% by weight of eugenol, 0.1-20% by weight of capsaicin, 1-75% by weight of tannin and 1-40% by weight of cresol, the amounts being calculated on the total amount of said components.

4. Use according to claims 2 or 3, wherein the animal feed contains
a) 10-70% by weight of cereals,
b) 1-12% by weight of feed fat,
c) 10-50% by weight of protein containing nutritious substances of a type other than cereals, and
d) 1-500 ppm of the mixture.

5. Use according to any one of the claims 1-4 for the alleviation, cure or prevention of necrotic enteritis.

6. Use according to any one of the claims 1-5, wherein the animal feed contains flavourings in an amount of 0.5-50 ppm.

7. Use according to any one of the claims 1-6 in the manufacture of a poultry feed.

8. Use according to any one of claims 2-7, wherein the animal feed contains 10-100 ppm calculated on the dry weight of the animal feed of a mixture consisting of guaiacol, thymol, eugenol, capsaicin, tannin and at least one cresol.

9. Use according to any one of the claims 1-3, wherein the drinking water supplement contains 2-90% by weight of the natural substance as defined in claims 1, 2 or 3 and 10-98% by weight of vitamines, mineral salts, flavourings, water-soluble or water-dispersable carriers and water-soluble or water-dispersable stabilisers.

10. Use according to claim 9 for the alleviation, cure or prevention of necrotic enteritis caused by clostridium perfringens.

## Patentansprüche

1. Verwendung eines Naturstoffs, in diesem Kontext eine Substanz, die aus Verbindungen besteht, die in der Natur vorkommen und aus Naturprodukten oder durch Synthese erhalten werden, der Thymol enthält, bei der Herstellung eines Tierfutters oder einer Trinkwasserergänzung für die Linderung, Heilung oder Vorbeugung von bzw. vor Krankheiten, die durch Clostridium sp. im Intestinaltrakt von Tieren verursacht werden.

2. Verwendung nach Anspruch 1, worin der Naturstoff eine Mischung von Guajacol, Thymol, Eugenol, Capsaicin, Tannin und mindestens einem Kresol enthält.

3. Verwendung nach Anspruch 2, worin die Mischung 1 bis 40 Gew.-% Guajacol, 10 bis 93 Gew.-% Thymol, 1 bis 40 Gew.-% Eugenol, 0,1 bis 20 Gew.-% Capsaicin, 1 bis 75 Gew.-% Tannin und 1 bis 40 Gew.-% Kresol enthält, wobei die Mengen bezogen auf die Gesamtmenge der genannten Komponenten berechnet werden.

4. Verwendung nach den Ansprüchen 2 oder 3, worin das Tierfutter
a) 10 bis 70 Gew.-% Getreide,
b) 1 bis 12 Gew.-% Nahrungsfett,
c) 10 bis 50 Gew.-% proteinhaltige Nährstoffe von einer Art, die von Getreide verschieden ist, und
d) 1 bis 500 ppm der Mischung enthält.

5. Verwendung nach irgendeinem der Ansprüche 1 bis 4 zur Linderung, Heilung oder Vorbeugung von bzw. vor nekrotischer Enteritis.

6. Verwendung nach irgendeinem der Ansprüche 1 bis 5, worin das Tierfutter Geschmacksstoffe in einer Menge von 0,5 bis 50 ppm enthält.

7. Verwendung nach irgendeinem der Ansprüche 1 bis 6 bei der Herstellung eines Geflügelfutters.

8. Verwendung nach irgendeinem der Ansprüche 2 bis 7, worin das Tierfutter bezogen auf das Trockengewicht des Tierfutters 10 bis 100 ppm einer Mischung bestehend aus Guajacol, Thymol, Eugenol, Capsaicin, Tannin und mindestens einem Kresol enthält.

9. Verwendung nach irgendeinem der Ansprüche 1 bis 3, worin die Trinkwasserergänzung 2 bis 90 Gew.-% des wie in den Ansprüchen 1, 2 oder 3 definierten Naturstoffs und 10 bis 98 Gew.-% Vitamine, Mineralsalze, Geschmacksstoffe, wasserlösliche oder in Wasser dispergierbare Träger und wasserlösliche oder in Wasser dispergierbare Stabilisatoren enthält.

10. Verwendung nach Anspruch 9 zur Linderung, Heilung oder Vorbeugung von bzw. vor nekrotischer Enteritis, die durch Clostridium perfringens verursacht wird.

## Revendications

1. Utilisation d'une substance naturelle, dans ce contexte, une substance constituée de composés existant dans la nature et obtenus à partir de produits naturels ou par synthèse, contenant du thymol, dans la fabrication d'une nourriture pour animaux ou d'un supplément d'eau potable pour soulager, guérir ou prévenir des maladies causées par clostridium sp dans les tractus intestinaux des animaux.

2. Utilisation selon la revendication 1, dans laquelle la substance naturelle contient un mélange de gaïacol, de thymol, d'eugénol, de capsaicine, de tanin et d'au moins un crésol.

3. Utilisation selon la revendication 2, dans laquelle le mélange contient 1-40% en poids de gaïacol, 10-93% en poids de thymol, 1-40% en poids d'eugénol, 0,1-20% en poids de capsaicine, 1-75% en poids de tanin et 1-40% en poids de crésol, les quantités étant calculées par rapport à la quantité totale desdits composants.

4. Utilisation selon la revendication 2 ou 3, dans laquelle la nourriture pour animaux contient
a) 10-70% en poids de céréales,
b) 1-12% en poids de graisse alimentaire,
c) 10-50% en poids de substances nutritives d'un autre type que les céréales, contenant des protéines et
d) 1-500 ppm du mélange.

5. Utilisation selon l'une quelconque des revendications 1-4 pour soulager, guérir ou prévenir une entérite nécrotique.

6. Utilisation selon l'une quelconque des revendications 1-5, dans laquelle la nourriture pour animaux contient des aromatisants en une quantité de 0,5-50 ppm.

7. Utilisation selon l'une quelconque des revendications 1-6 dans la fabrication d'une nourriture pour volailles.

8. Utilisation selon l'une quelconque des revendications 2-7, dans laquelle la nourriture pour animaux contient 10-100 ppm, calculés sur le poids sec de la nourriture pour animaux, d'un mélange constitué de gaïacol, de thymol, d'eugénol, de capsaicine, de tanin et d'au moins un crésol.

9. Utilisation selon l'une quelconque des revendications 1-3, dans laquelle le supplément d'eau potable contient 2-90% en poids de la substance naturelle telle que définie dans la revendication 1, 2 ou 3 et 10-98% en poids de vitamines, de sels minéraux, d'aromatisants, de véhicules solubles dans l'eau ou dispersables dans l'eau et de stabilisants solubles dans l'eau ou dispersables dans l'eau.

10. Utilisation selon la revendication 9 pour soulager, guérir ou prévenir une entérite nécrotique causée par clostridium perfringens.
